# EUROPEAN PATENT SPECIFICATION

(11) **EP 1 948 851 B1**
(45) Date of publication and mention of the grant of the patent: **14.11.2012**
(21) Application number: 06791998.5
(22) Date of filing: 12.09.2006
(51) Int. Cl.: C25D 7/06, B05D 3/10, C25D 5/36, C25D 5/50, C23C 28/00

(54) **PROCESS FOR PRODUCING TINPLATE, TINPLATE PRODUCED USING SAID PROCESS AND PACKAGING PRODUCED THEREOF**
VERFAHREN ZUR HERSTELLUNG VON WEISSBLECH, DANACH HERGESTELLTES WEISSBLECH UND DARAUS HERGESTELLTE VERPACKUNG
PROCEDE DE FABRICATION DE FER BLANC, FER BLANC OBTENU PAR LEDIT PROCEDE, ET EMBALLAGE FABRIQUE A PARTIR DUDIT FER BLANC

(30) Priority: 13.09.2005 EP 05077076; 23.12.2005 EP 05028316
(43) Date of publication of application: 30.07.2008
(73) Proprietor: Chemetall GmbH, 60487 Frankfurt am Main (DE)
(72) Inventor: BOS, Linda, NL-1705 NJ Heerhugowaard (NL); DE VREUGD, Daniël, Adriaan, NL-1948 AM Beverwijk (NL); BEENTJES, Petrus, Cornelis, Jozef, NL-1902 AA Castricum (NL); KOOPMANS, Pieter, NL-1963 DH Heemskerk (NL)
(74) Representative: Hübner, Günter
(86) International application number: PCT/EP2006/008876
(87) International publication number: WO 2007/031276

(56) References cited:
- EP-A- 0 887 392
- GB-A- 1 264 228
- US-A- 4 302 512
- US-A- 4 726 208
- US-A- 5 665 433
- US-A- 5 928 487

## Description

This invention relates to a process for producing tinplate, tinplate produced using said process and packaging produced thereof.

Tinplate in the context of this invention is to be understood as plate for cans (eng: 'tins'). Tinplate is usually provided in the form of a cold-rolled and annealed steel substrate, usually with a thickness between 0.05 and 0.50 mm. To protect the steel substrate against corrosion and to protect the contents of the can made from the steel substrate against the corrosion products, the steel substrate is usually provided with a protective metal coating, such as a tin coating. This tin-coated steel is referred to as tinplate. In the production of tin-coated steel the tin is usually applied by an electrolytic deposition process. To stabilize the surface characteristics of the tin layer by controlling tin oxide formation and growth, the tin layer is subjected to a post-treatment comprising a passivation treatment. The most common commercially available passivation treatments involve the use of a solution comprising chromate ions, i.e. comprising hexavalent chromium or Cr(VI) containing compounds. As a result of the passivation treatment, excellent lacquer adhesion properties and sulphur staining resistance during sterilization can be obtained.

A disadvantage of this type of passivation treatment involving chromate ions is that environmental and health concerns exist about the long term use of Cr(VI)-compounds. It is an object of this invention to provide an environmentally and health friendly alternative to the Cr(VI)-based passivation treatment of tinplate. It is also an objective to provide alternative to the Cr(VI)-based passivation treatment of tinplate which can be economically and stably performed in existing process lines.

It is also an object of this invention to provide tinplate for food-safe packaging applications which also provides good lacquer wettabillity and adhesion and/or good sulphur staining resistance and/or weldability and/or formability during production and use of the packaging. It is also an object of this invention to provide said packaging applications.

According to the invention, one or more of these objects can be reached by providing a process for producing tinplate comprising the steps of
- providing a cold rolled and annealed steel strip;
- cleaning and pickling the steel strip;
- providing the steel strip with a tin layer;
- treating the tin layer so as to obtain a tin layer free from organic contaminants and with a high surface concentration of hydroxyl groups so as to ensure perfect wettability and adsorption of the polysiloxane and/or the (poly)silanol components from which the polysiloxane is ultimately formed to the tin layer
- providing an aqueous solution comprising the desired amount of siloxanes or (poly)silanols to the tin layer to apply the coating layer on the tin layer;
- applying a coating layer on the tin layer, wherein the coating layer comprises polysiloxane, wherein the polysiloxane is produced by a polymerization reaction of mono-silane and/or bis-silane monomers;
- subjecting the coating layer to a drying step to remove solvents and/or to Initiate the polymerisation reaction and/or to cure the polysiloxane film so as to complete the polymerisation reaction wherein a coating layer comprising polysiloxane is produced having a dry film weight between 0.25 and 10 mg/m² Si,
- optionally applying an oil film on top of the coating layer,

In the invention the polysiloxane for the polysiloxane film is produced by a polymerization reaction of mono-silane and/or bis-silane monomers to produce polysiloxane.

The inventors have found that a coating layer comprising polysiloxane results in an excellent surface treatment of the tin-layer on a steel substrate. This treatment takes away the need for a Cr(VI)-based passivation treatment, and the process can be performed Cr(VI)-free. The surface treatment is therefore characterised by the absence of Cr(VI)-compounds. The environmental and health hazards associated with the Cr(VI)-treatment are thereby avoided. It is noted that the functional properties of the tinplate, such as wettability for lacquer, weldability and formability, are at least comparable to those of the Cr(VI)-treated tinplate. The use of the polysiloxane-treatment instead of the Cr(VI)-treatment necessitates minimal adjustments to existing coating lines, whereas the waste-water treatment may be simplified. It may even be possible to leave out part of the chemical treatment section, or even the entire chemical treatment section, resulting in a significant economical advantage. It should be noted that the tin layer may be applied by electrolytic deposition or by hot-dipping, but also by PVD. It should also be noted that the steel substrate may be any steel which can be used for packaging applications. Nowadays un-alloyed or low-alloyed steel are often used for packaging applications. The majority of the steels used for packaging purposes are commonly referred to as (extra) low carbon steels or mild steels. However, for specific applications, high-strength steels or stabilised or unstabilised ultra low-carbon steels may also be used for packaging purposes. It is preferable to apply the process according to the invention to steel strips in a continuous process because the benefits of the process can be exploited more easily this way. After processing, the strips can be coiled. However, it should be noted that the process according to the invention can also be applied to sheet material. It should also be noted that the process according to the invention can be applied to a tin-coated steel substrate wherein between the substrate and the tin layer one or more additional layers are present.

The condition of the tinplate surface prior to applying the polysiloxane film is a key parameter. The tin surface should be free from organic contaminants to ensure perfect wettability and adsorption of the polysiloxanes. Complete or substantially complete wettability is important for formation of a uniform Polysiloxane monolayer. It is believed that Polysiloxanes will adsorb as a monolayer on the tin surface of the tin layer on the steel substrate by formation of hydrogen bonds between the hydroxyl groups of the polysiloxanes and the hydroxyl groups present on the tin surface. Fresh hydroxyl groups are therefore required on the tin surface to ensure optimal formation of Sn-O-Si bonds between tin and the polysiloxane network structure. The condensation between the silanol (Si-OH) groups and the hydroxyl groups on the tinplate surface results in a metallosiloxane bond (Sn-O-SI) between tinplate and the polysiloxane. Maximizing the concentration of hydroxyl groups on the surface of the tin will ensure an optimal adhesion of the polysiloxane coating to the surface of the tin and complete coverage of the tin surface with a monolayer of polysiloxanes thus effectively conditioning the surface of the tin.

In the invention after applying the polysiloxane coating layer to the tin layer the polysiloxane coating layer is subjected to a drying step to remove solvents and/or to initiate the polymerization reaction and/or to cure the polysiloxane film so as to complete the polymerization reaction.

The heat treatment in the form of a drying step removes the water, reaction products such as alcohol in general or ethanol in a preferred embodiment, or any other volatile solvents. By removing water cross-linking between the remaining hydroxyl groups of the polysiloxanes is stimulated resulting in a network structure with a hydrophobic siloxane backbone. This forms a substantially fully or even fully cross-linked polysiloxane network covalently bonded to the tin surface. This cross-linked network is immobile and can therefore not migrate into the contents of the packaging. The drying step can be performed using the residual heat of the strip, or a (hot) air blower.

WO99/44756 discloses a process for producing metal strips which are provided with a non-metallic coating and a thermoplastic resin on top of that non-metallic coating. The purpose of the non-metallic coating is to prevent the corrosion of the reactive metal surface of steel prior to coating with a thermoplastic resin. This steel substrate provided with a non-metallic coating process provides an alternative to the conventional substrate provided with a protective metal coating layer and the non-metallic coating fully replaces the protective metal coating layer because the non-metallic coating protects the reactive steel surface devoid of a metallic coating against corrosion. WO99/44756 discloses that the non-metallic corrosion protection coating may comprise silanes. The inventors have now surprisingly found that a non-metallic coating comprising polysiloxane may be advantageously used on top of a protective metallic coating to replace the hazardous and unhealthy Cr(VI)-based passivation process.

A general formula for a mono-silane monomer is Y-SiX₃ where Y is an organo-functional group linked to silicon by a hydrolytically stable bond and X denotes hydrolysable groups, e.g. alkoxy groups, which may be converted to silanol groups and alcohol on hydrolysis according to reaction (1).

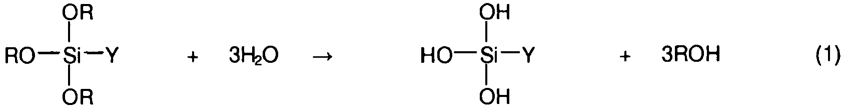

A hydroxyl group of a silanol monomers may condensate with a hydroxyl group of another silanol monomer and form a siloxane dimer and water. The hydroxyl group of a silanol dimer may further condensate with hydroxyl groups of other silanol monomers, dimers, trimers, finally resulting in oligomers.

For the bis-silane monomers similar considerations apply, and the formation of a bis-silanol is given by reaction (2).

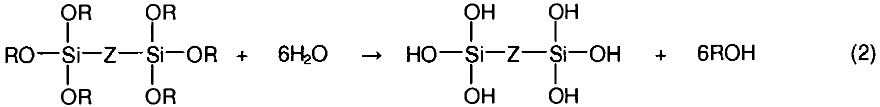

In a preferred embodiment of the invention R=CH₃CH₂ resulting in ethanol as the alcohol on hydrolysis of the silane monomer. Ethanol as a product of the hydrolysis is compatible with food safety. Beside being a reaction product, ethanol also serves as a stabilizing agent in a water-based solution of hydrolyzed silanes and condensated oligomeric siloxanes or polysiloxanes.

In a preferred embodiment, the tin-coated layer is subjected to a heat treatment wherein the tin is melted and quenched. The resulting coating after melting and quenching is a composite, comprising a thin layer of tin over an even thinner layer composed of the alloy FeSn₂ which is formed by reaction between the electroplated tin and the steel substrate. Each layer is tightly bonded to the adjacent one. The surface of the tin-layer is effectively conditioned by the polysiloxane-treatment for further processing.

In an embodiment of the invention the tin layer after quenching is treated so as to obtain a tin layer substantially free of organic contaminants and with a high surface concentration of hydroxyl groups so as to ensure optimal wettability, preferably substantially complete wettability, of the tin layer and adsorption of the polysiloxane to the tin layer.

The condition of the tinplate surface is strongly influenced as a result of the melting and quenching step. The ideal tin-layer surface should consist of fresh hydroxyl groups. One way to achieve such a surface condition is by slightly increasing the pH of the quenching water, but not too high to prevent staining of tin or by a simple (hot) water dip. It should be noted that the condensation of polysilanols is OH-catalyzed. So an acidic surface slows down the condensation.

Preferred silane and bis-silane monomers are γ-amino-propyltri-ethoxysilane with R= R=CH₃CH₂ and Y=CH₂CH₂CH₂NH₂ and bis-1,2[triethoxysilyl]ethane with R=CH₃CH₂ and Z=CH₂CH₂. The amino-group serves as a chemically reactive group during lacquer curing resulting in optimal lacquer adhesion to the final polysiloxane film. Z=CH₂CH₂ is chosen to improve flexibility of the final polysiloxane film, which is desirable during the production of packaging parts such as cans and can ends. However, if so desired, Z may also be chosen differently, for instance if the presence of an organo-functional group is desired at that location.

In an embodiment of the invention the compounds forming the polysiloxane, or the polysiloxane thus formed are applied to the tin layer by means of an application process, such as a spray process, a dip process, or a roll coating process. Preferably the application process is a spray process. In a preferred embodiment, the ratio of compounds forming the polysiloxane, i.e. the ratio of silane over bis-silane monomers is between 1.0 and 9.0, preferably between 2.0 and 6.0, more preferably between 3.0 and 5.0. The solution to be applied to the tin layer preferably comprises water, about 0.125 to 0.88% in weight of ethanol, preferably about 0.5 to 0.75% in weight of ethanol, more preferably about 0.63% in weight of ethanol and from 0.25 to 3.0 g/l of polysiloxane, preferably from 0.5 to 2.5 g/l, more preferably from 0.75 to 2.25 g/I. A solution of 1.75 to 2.25 g/l of polysiloxane, i.e. about 2 g/l of polysiloxane provided excellent results. The application may be done in this form, but also in the form of a concentrate which is diluted to the values given above. In an alternative solution, the compounds forming the polysiloxane, or the polysiloxane thus formed are provided in a solution without alcohol such as ethanol. The additional advantage of using this solution is the reduction in VOC-emission. It should be noted that additives may be added to the polysiloxane solution with the purpose of influencing the resistance against sulphur staining, to influence the corrosion resistance or to influence the adhesion of the coating layer comprising polysiloxane to the tin coating. These additives may comprise a salt of zirconium, phosphor, titanium, molybdenum, zinc, or cerium.

A dip process with or without squeegee rolls, spray and roll coating are the commonly used techniques for applying a thin wet film on a strip surface. At typical strip speeds up to 600 m/min in a tinplating line the application by roll coating may be restricted due to the shearing forces on the surface. A dip process combined with squeegee rolls results in an improved and homogenous wetting but necessitates wastewater treatment due to aging of the compounds forming the polysiloxane, or the polysiloxane thus formed and/or contamination from previous process sections. In view of the limited lifetime after dilution with water of the compounds forming the polysiloxane, or the polysiloxane thus formed, and in view of the possible reduction in lifetime if the solution becomes contaminated due to drag out of solution from previous process sections, a spray process is the preferred application method. By spraying the exactly required quantity the amount of wastewater will be minimised. Preferably, the strip temperature is low to avoid or at least minimise the evaporation of solvents resulting in the formation of a closed monolayer during adsorption of the polysiloxanes. Moreover, the temperature difference between the strip and the chemical is preferably as small as possible to prevent drying stains, which might result in an inhomogeneous distribution of the polysiloxanes.

According to a second aspect of the invention, tinplate produced according to the process of the invention is provided wherein the tinplate comprises a steel substrate, preferably wherein the steel substrate is provided in the form of a strip. This tinplate can be used for producing packaging for food-safe packaging applications which also provides good lacquer wettabillity and adhesion and/or good sulphur staining resistance and/or weldability and/or formability during production and use of the packaging. The tinplate can be used for any other packaging purpose, such as for packaging non-food products, aerosols cans, battery cans. It should be noted that food is to be understood as comprising solid food such as meat or fish products, but also liquid or semi-liquid food such as beverages, soup or condensed milk.

In the invention tinplate comprises a coating layer comprising polysiloxane with a dry film weight between 0.25 to 10 g mg/m² Si, preferably between 0.4 and 4 mg/m² Si. It was found that these values fulfill the sulphur staining and adhesion requirements. For cost effectiveness a low film weight is preferred. A suitable lower value for the dry film weight is 0.5 mg/m² Si.

It is also an object of this invention to provide packaging comprising tinplate produced according to the invention and also to provide packaging comprising tinplate according to the invention. These packaging have, during their production, not caused any Cr(VI)-related problems and provide equal or better properties in comparison to those produced using the Cr(VI)-treatment.

The invention will now be further explained by the following, non-limiting examples.

### Examples

An aqueous siloxane solution was prepared by mixing in a volume ratio of 4:1 a first solution comprising γ-aminopropyltriethoxysilane (CAS 919-30-2) and a second solution comprising bis-1,2-[triethoxysilyl]ethane (CAS 16068-37-4) at a pH between 4 and 6. The first solution was prepared by dissolving 10 vol% γ-aminopropyltriethoxysilane in acidified water (pH≈4, acetic acid). The second solution was prepared by dissolving 10 vol% bis-1,2-[triethoxysilyl]ethane in an acidified water/ethanol solution (pH≈4, acetic acid). The first and second solution were diluted to equal volume concentrations before mixing, resulting in a final aqueous siloxane solution comprising the desired amount of polysiloxanes. For the examples a solution comprising 0.625 g/l of polysiloxanes was prepared.

Non-passivated tinplate was provided with a dry polysiloxane film weight of 4 mg/m² Si using a roll coater. Roll coating was used to ensure a homogeneous wet film distribution. Samples were subjected to different pretreatments and rinsed thoroughly with tap and demineralised water. After removing residual rinse water with squeegee rolls and drying with compressed air the samples were provided on one side with 8 ml/m² of 0.625 g/l of the aqueous siloxane solution. Samples were horizontally placed in a hot air oven at 180 °C for 40 s resulting in a peak metal temperature (PMT, i.e. the maximum temperature of the steel substrate) of 85 °C.

In a commercial tinplating line a spray system was installed just above the squeegee rolls of the last rinsing tank of the passivation treatment section. The last rinsing tank was operated at 85 °C to obtain a dry strip just before the deflector rolls. Steel strip used was T65 CA 0.20 mm stone finish with 3.8 g/m² Sn of which 0.5 g/m² alloyed tin and 4 g/m² DOS oil. A 0.625 g/l aqueous siloxane solution was prepared and applied using fan spraying nozzles on each strip side divided equally over the strip width of 913.5 mm. The solution was sprayed with 3 l/min on each strip side at a strip speed of 300 m/min. Visual inspection resulted in A quality. After the trial the coils were cut into sheets.

In all cases 311 passivated tinplate (0.20 mm T61 CA) was used as a reference with a tin coating weight of 2.8 g/m² (of which 0.5 g/m² alloyed tin) and 4 mg/m² DOS oil.

### Weldability

Welding trials were performed on ∅ 52 x 75 mm can bodies. A welding speed of 22.9 m/min was used at a production rate of 300 cans min⁻¹ and a rounding speed of 187 m/min. The bodies were welded in C grain orientation with a nugget pitch of 0.67 mm and an electrode force of 500 N using a sine wave form at a frequency of 289 Hz.

The tests revealed polysiloxane treated tinplate fulfils the commercial requirements. Its performance is comparable to that of 311 chromium-passivated tinplate.

### Lacquering

Samples were lacquered after one day with PPG3907-301/A from HOBA using a Peeters lacquering mill. After curing in a hot air oven at 210 °C for 12 min a dry lacquer film weight of 4.3 - 5.8 g/m² was obtained.

### Sulphur staining test on lacquered panels

A solution was prepared of 3.56 g/l KH₂PO₄ and 7.22 g/l Na₂HPO₄·2H₂O in which 0.5 g/l L-cystein hydrochloride monohydrate (HSCH₂CHNH₂COOH·HCl·H₂O) was dissolved. Flat panels were sterilised in this solution at 121 °C for 90 min. Visual observation was used to score discoloration in declining order with values from 0 to 5.

### Lacquer adhesion test on lacquered panels

* Dry adhesion on flat panels was tested using the Gitterschnitt test according to ASTM D3359-02 with an Erichsen 430/2 cross-cutter and Scotch tape 3M no. 610. Delamination values were determined visually and range in declining order from Gt 0 to 5.
* Dry adhesion on deformed panels was tested on flat panels which were deformed with 5 mm indentation and a deformation rate of 0.15 mm/s according to ISO 1520 (E) using Sheen cupping equipment. A cross was placed over the Erichsen dome and through the lacquer. Adhesion was tested with Scotch tape 3M no. 610. Delamination values were determined visually and range in declining order from Gt 0 to 5.
* Wet adhesion on flat panels was tested on panels sterilised in 12 g/l broth and 2 g/l plasmal (pH 8.2) at 121 °C for 60 min. Adhesion was tested using the Gitterschnitt test according to ASTM D3359-02 with an Erichsen 430/2 cross-cutter and Scotch tape 3M no. 610. Delamination values were determined visually and range in declining order from Gt 0 to 5.
* Wet adhesion on deformed panels was tested on flat panels which were deformed with 5 mm indentation and a deformation rate of 0.15 mm/s according to ISO 1520 (E) using Sheen cupping equipment. Samples were sterilised in 12 g/l broth and 2 g/l plasmal (pH 8.2) at 121 °C for 60 min. A cross was placed over the Erichsen dome and through the lacquer. Adhesion was tested with Scotch tape 3M no. 610. Delamination values were determined visually and range in declining order from Gt 0 to 5.

The results of the sulphur staining resistance tests and lacquer adhesion tests are provided in Table 1

**Table 1: Results of sulphur staining and lacquer adhesion tests for polysiloxane treated tinplate panels for different pretreatments, polysiloxane coating weights and curing conditions.**

| Sample | Pretreatment | Application | Dry film weight | Curing | S-staining | Wet adhesion | |
|---|---|---|---|---|---|---|---|
| | | | | | | Flat sample | Deformed sample |
| 01 | DI water, 100 °C, 30 s | 8 ml/m² / 0.625 g/l | 4 mg/m² Si | 180 °C, 40 s | 0 | Gt ¼ | Gt 0 |
| 02 | DI water, 25 °C, 30 s | 8 ml/m² / 0.625 g/l | 4 mg/m² Si | 180 °C, 40 s | 1¼ | Gt ¼ | Gt 0 |
| 03 | 0.1 M NaOH, 25 °C, 30 s | 8 ml/m² / 0.625 g/l | 4 mg/m² Si | 180 °C, 40 s | 0 | Gt 0 | Gt 0 |
| 04 | 0.1 M NaOH, 40 °C, 30 s | 8 ml/m² / 0.625 g/l | 4 mg/m² Si | 180 °C, 40 s | ¾ | Gt 0 | Gt 0 |
| 05 | 0.1 M NaOH, 85 °C, 30 s | 8 ml/m² / 0.625 g/l | 4 mg/m² Si | 180 °C, 40 s | 2½ | Gt 0 | Gt 0 |
| 06 | 1 M NaOH, 85 °C, 30 s | 8 ml/m² / 0.625 g/l | 4 mg/m² Si | 180 °C, 40 s | 3 | Gt 0 | Gt 0 |
| 07 | Bonder S5160, 30 s | 8 ml/m² / 0.625 g/l | 4 mg/m² Si | 180 °C, 40 s | 5 | Gt 0 | Gt 0 |
| 08 | 0.1 M H₂SO₄, 25 °C, 30 s | 8 ml/m² / 0.625 g/l | 4 mg/m² Si | 180 °C, 40 s | ¼ | Gt 0 | Gt ¼ |
| 09 | DI water, 100 °C, 30 s | 8 ml/m² / 1.25 g/l | 8 mg/m² Si | 180 °C, 40 s | 0 | Gt 1¼ | Gt ¼ |
| 10 | DI water, 100 °C, 30 s | 8 ml/m² / 0.31 g/l | 2 mg/m² Si | 180 °C, 40 s | ¼ | Gt 0 | Gt 0 |
| 11 | DI water, 100 °C, 30 s | 8 ml/m² / 0.15 g/l | 1 mg/m² Si | 180 °C, 40 s | ⅛ | Gt 0 | Gt 0 |
| 12 | DI water, 100 °C, 30 s | 8 ml/m² / 0.075 g/l | 0.5 mg/m² Si | 180 °C, 40 s | 0 | Gt 0 | Gt 0 |
| 13 | DI water, 100 °C, 30 s | 8 ml/m² / 0.625 g/l | 4 mg/m² Si | 180 °C, 60 s | 0 | Gt 0 | Gt 0 |

It can be concluded that the type of pretreatment significantly affects the sulphur staining. Both a simple hot water dip (sample 1) and a low temperature and slightly alkaline dip (sample 3) give satisfactory results. Increasing the temperature of the alkaline dip (samples 4 and 5) and increasing the alkalinity (sample 6) result in a decreasing sulphur staining resistance. Sample 7 was pretreated with a KOH based cleaning agent resulting in a very poor sulphur staining resistance. Surprisingly, even a low temperature and slightly acidic pretreatment (sample 8) gives satisfactory results.

Comparing sample 1 with 9 - 12 it can be concluded that dry film weights down to 0.5 mg/m² fulfill the sulphur staining and adhesion requirements. For cost effectiveness a low film weight is preferred.

Curing at a PMT of 85 °C (sample 1) compared to a higher PMT of 160 °C (sample 13) already gives a polysiloxane network that is condensed enough for protection against sulphur staining.

Pretreated tinplate samples were examined with angular resolved XPS to study the effect of the pretreatment on the surface concentration of hydroxyl groups. It was found that both a hot water and an alkaline pretreatment result in higher surface concentrations of hydroxyl groups.

Preferably the solvents in the polysiloxane coating are completely removed, for instance by evaporation the solvents as a result of a high temperature. Especially removal of water is of importance for a complete condensation of the silanol groups in the polysiloxane film.

### Pack test

Tinplate sheets from the line trial of 52 x 50 cm were cut and lacquered on both sides with PPG2145-801/C from Packaging Coatings using a Wagner lacquering mill. The sheets were first lacquered on one side and dried in an oven at 190 °C for 9 minutes. After lacquering of the other side the sheets were cured at 200 °C for 16 min. The applied lacquer thickness ranged from 5.6 - 7.3 µm. Can ends with terraces were produced from lacquered and unlacquered sheets on a Bliss II press using oil NF-110084 from PPG. After applying the curl, the can ends were provided with water based compound WBC 733 PHV from Darex/Grace on Grace 8BX automatic liner equipment. The applied amount was 82 ± 5 mg per can end using a nozzle gap of 0.8 mm and a pressure of 1.15 bar at a production rate of 200 cans/min and a rotation speed of 400 min⁻¹. The compound was dried in an oven at 110 °C for 20 min and stored at 20 °C for at least 48 h. The tinplate according to the invention was tested with the following components:
1: Broth plasmal: 206 g of 12 g/l broth + 2 g/l1 plasmal filled at 80 °C with 5% head space. Filled and closed under steam, sterilisation at 121 °C for 60 min
2. Acetic acid / salt: 206 g of 3.6% NaCl + 1 % acetic acid filled at 80 °C with 5% head space. Filled and closed under steam, pasteurisation at 85 °C for 30 min
3. Sweet condensed milk: Filled and closed under steam
4. Tomato soup: Filled at 80 °C with 5% head space. Filled and closed under steam and sterilised at 121 °C for 60 min.

The can used were commercial food cans (0 73 mm) from 311 passivated tinplate. The can ends were made from the tinplate according to the invention. The cans filled with condensed milk were only closed with unlacquered can ends. Tomato soup was closed with both lacquered and unlacquered can ends. The other cans were closed with lacquered can ends of which some were deliberately scratched through the lacquer. All closed cans were stored at 35 °C and opened after three months for further visual evaluation. The pack test showed similar corrosion and adhesion results for polysiloxane treated tinplate compared to the 311 reference. Only unlacquered can ends showed some minor brown stains on the heavily deformed parts (terraces) which were also observed on the 311 reference.

It is of course to be understood that the present invention is not limited to the described embodiments and examples described above, but encompasses any and all embodiments within the scope of the description and the following claims.

## Claims

1. A process for producing tinplate comprising the steps of
- providing a cold rolled and annealed steel strip;
- cleaning and pickling the steel strip;
- providing the steel strip with a tin layer;
- treating the tin layer so as to obtain a tin layer free from organic contaminants and with a high surface concentration of hydroxyl groups so as to ensure perfect wettability and adsorption of the polysiloxane and/or the (poly)silanol components from which the polysiloxane is ultimately formed to the tin layer
- providing an aqueous solution comprising the desired amount of siloxanes or (poly)silanols to the tin layer to apply the coating layer on the tin layer;
- applying a coating layer on the tin layer, wherein the coating layer comprises polysiloxane, wherein the polysiloxane is produced by a polymerization reaction of mono-silane monomer wherein the mono-silane monomer is γ-amino-propyltri-ethoxysilane and bis-silane monomers wherein the bis-silane monomers is bis-1,2[triethoxysilyl]ethane;
- subjecting the coating layer to a drying step to remove solvents and/or to initiate the polymerisation reaction and/or to cure the polysiloxane film so as to complete the polymerisation reaction wherein a coating layer comprising polysiloxane is produced having a dry film weight between 0.25 and 10 mg/m² Si,
- optionally applying an oil film on top of the coating layer,

2. Process according to claim 1 wherein the tin-layer is subjected to a melting and quenching step.

3. Process according to any one of the preceding claims wherein the drying step is performed using the residual heat of the strip.

4. Process according to any one of the preceding claims wherein the mono-silane comprises an amino-group to serve as a chemically reactive group during lacquer curing resulting in optimal lacquer adhesion to the final polysiloxane film.

5. Process according to any one of the preceding claims wherein the polysiloxane for the polysiloxane film is produced by a polymerization reaction of (poly)silanols, which are formed by hydrolysis of mono-silane and/or bis-silane monomers.

6. Process according to any one of claim 2 to 5 wherein the tin layer after melting is quenched in alkalic water or hot water to achieve a high surface concentration of hydroxyl groups.

7. Process according to any one of the preceding claims wherein the compounds forming the polysiloxane, and/or the (poly)silanol components from which the polysiloxane is ultimately formed and/or the polysiloxane thus formed are applied to the tin layer by means of a spray process or a plasma coating process.

8. Process according to any one of the preceding claims wherein the coating layer consists substantially of polysiloxane.

9. Process according to any one of the preceding claims wherein ethanol is the reaction product of the hydrolysis of the silane monomers.

10. Process according to any one of the preceding claims wherein the mono-silane monomer is γ-amino-propyltri-ethoxysilane with R=CH₃CH₂ and Y=CH₂CH₂CH₂NH₂ and wherein the bis-silane monomer is bis-1,2[triethoxysilyl]ethane with R=CH₃CH₂ and Z=CH₂CH₂.

11. Process according to any one of the preceding claims wherein the ratio of mono-silane monomer over bis-silane monomers is between 1.0 and 9.0.

12. Process according to any one of the preceding claims wherein the solution to be applied to the tin layer is applied by a spray process and preferably comprises water, about 0.125 to 0.88% in weight of ethanol, and from 0.25 to 3.0 g/l of polysiloxane or polysiloxane precursor compounds ((poly)silanols).

13. Process according to any one of the preceding claims wherein a coating layer comprising polysiloxane is produced having a dry film weight of at least 0.5 mg/m² Si.

14. Tinplate produced according to any one of claims 1 to 13 wherein the tinplate comprises a steel substrate, preferably wherein the steel substrate is provided in the form of a strip wherein the coating layer comprising polysiloxane was produced by a polymerization reaction of mono-silane monomer wherein the mono-silane monomer is γ-amino-propyltri-ethoxysilane and bis-silane monomers wherein the bis-silane monomers is bis-1,2[triethoxysilyl]ethane and has a dry film weight between 0.25 to 10 mg/m2 Si.

## Patentansprüche

1. Verfahren zum Herstellen von Weißblech, umfassend die folgenden Schritte
- Bereitstellen eines kaltgewalzten und geglühten Stahlbandes;
- Reinigen und Beizen des Stahlbandes;
- Bereitstellen des Stahlbandes mit einer Zinnschicht;
- Behandeln der Zinnschicht, um eine Zinnschicht zu erhalten, die frei von organischen Kontaminanten ist und eine hohe Oberflächenkonzentration von Hydroxylgruppen aufweist, um eine ausgezeichnete Benetzbarkeit und Adsorption der Polysiloxan- und/oder der (Poly)silanolbestandteile zu gewährleisten, aus denen das Polisiloxan schließlich zu der Zinnschicht gebildet wird;
- Bereitstellen einer wässrigen Lösung, die die gewünschte Menge von Siloxanen oder (Poly)silanolen umfasst, für die Zinnschicht, um die Beschichtungsschicht auf die Zinnschicht aufzubringen;
- Aufbringen einer Beschichtungsschicht auf die Zinnschicht, wobei die Beschichtungsschicht Polysiloxan umfasst, wobei das Polysiloxan durch eine Polymerisationsreaktion von Monosilanmonomer hergestellt wird, wobei das Monosilanmonomer γ-Aminopropyltriethoxysilan- und bis-Silanmonomere sind, wobei die bis-Silanmonomere bis-1,2[Triethoxysilyl]ethan sind;
- Unterziehen der Beschichtungsschicht einem Trocknungsschritt zum Entfernen von Lösungsmitteln und/oder Initiieren der Polymerisationsreaktion und/oder Aushärten des Polysiloxanfilms, um die Polymerisationsreaktion zu vollenden, wobei eine Beschichtungsschicht, die Polysiloxan umfasst, mit einem Trockenfilmgewicht zwischen 0,25 und 10 mg/m² Si hergestellt wird;
- wahlweise Auftragen eines Ölfilms auf die Oberseite der Beschichtungsschicht.

2. Verfahren nach Anspruch 1, wobei die Zinnschicht einem Schmelz- und Abschreckschritt unterzogen wird.

3. Verfahren nach einem der vorherigen Ansprüche, wobei der Trocknungsschritt unter Verwendung der Restwärme des Bandes ausgeführt wird.

4. Verfahren nach einem der vorherigen Ansprüche, wobei das Monosilan eine Aminogruppe umfasst, um während der Lackaushärtung als eine chemisch reaktive Gruppe zu dienen, was zu einer optimalen Lackadhäsion an dem endgültigen Polysiloxanfilm führt.

5. Verfahren nach einem der vorherigen Ansprüche, wobei das Polysiloxan für den Polysiloxanfilm durch eine Polymerisationsreaktion von (Poly)silanolen hergestellt wird, die durch Hydrolyse von Monosilan- und/oder bis-Silanmonomeren gebildet werden.

6. Verfahren nach einem der Ansprüche 2 bis 5, wobei die Zinnschicht nach dem Schmelzen in alkalischem Wasser oder heißem Wasser abgeschreckt wird, um eine hohe Oberflächenkonzentration von Hydroxylgruppen zu erreichen.

7. Verfahren nach einem der vorherigen Ansprüche, wobei die Verbindungen, die das Polysiloxan bilden, und/oder die (Poly)silanolbestandteile, aus denen das Polysiloxan schließlich gebildet wird, und/oder das so gebildete Polysiloxan mittels eines Sprühverfahrens oder eines Plasmabeschichtungsverfahrens auf die Zinnschicht aufgebracht werden.

8. Verfahren nach einem der vorherigen Ansprüche, wobei die Beschichtungsschicht im Wesentlichen aus Polysiloxan besteht.

9. Verfahren nach einem der vorherigen Ansprüche, wobei Ethanol das Reaktionsprodukt der Hydrolyse der Silanmonomere ist.

10. Verfahren nach einem der vorherigen Ansprüche, wobei das Monosilanmonomer γ-Aminopropyltriethoxysilan mit R=CH₃CH₂ und Y=CH₂CH₂CH₂NH₂ ist und wobei das bis-Silanmonomer bis-1,2[Triethoxysilyl]ethan mit R=CH₃CH₂ und Z=CH₂CH₂ ist.

11. Verfahren nach einem der vorherigen Ansprüche, wobei das Verhältnis von Monosilanmonomer zu bis-Silanmonomeren zwischen 1,0 und 9,0 beträgt.

12. Verfahren nach einem der vorherigen Ansprüche, wobei die Lösung, die auf die Zinnschicht aufzubringen ist, durch ein Sprühverfahren aufgebracht wird und vorzugsweise Wasser, etwa 0,125 bis 0,88 Gew.-% Ethanol und von 0,25 bis 3,0 g/l Polysiloxan oder Polysiloxanvorläuferverbindungen ((Poly)silanole) umfasst.

13. Verfahren nach einem der vorherigen Ansprüche, wobei eine Beschichtungsschicht, die Polysiloxan umfasst, mit einem Trockenfilmgewicht von mindestens 0,5 mg/m² Si hergestellt wird.

14. Weißblech nach einem der Ansprüche 1 bis 13, wobei das Weißblech ein Stahlsubstrat umfasst, wobei das Stahlsubstrat vorzugsweise in Form eines Bandes bereitgestellt ist, wobei die Beschichtungsschicht, die Polysiloxan umfasst, durch eine Polymerisationsreaktion von Monosilanmonomer hergestellt wurde, wobei das Monosilanmonomer γ-Aminopropyltriethoxysilan und bis-Silanmonomere sind, wobei die bis-Silanmonomere bis-1,2[Triethoxysilyl]ethan sind und ein Trockenfilmgewicht zwischen 0,25 bis 10 mg/m² Si aufweisen.

## Revendications

1. Procédé de production de fer blanc qui comprend les étapes consistant à :
- se procurer une bande d'acier recuit et laminé à froid ;
- nettoyer et décaper la bande d'acier ;
- constituer une couche d'étain sur la bande d'acier ;
- traiter la couche d'étain pour obtenir une couche d'étain dépourvue de contaminants organiques et ayant une grande concentration en groupes hydroxyle à la surface pour assurer la mouillabilité et l'adsorption parfaites du polysiloxane et/ou des composants (poly)silanols à partir desquels le polysiloxane est finalement formé sur la couche d'étain ;
- fournir une solution aqueuse comprenant la quantité souhaitée de siloxanes ou de (poly)silanols sur la couche d'étain pour appliquer la couche de revêtement sur la couche d'étain ;
- appliquer une couche de revêtement sur la couche d'étain, la couche de revêtement comprenant du polysiloxane, le polysiloxane étant produit par une réaction de polymérisation d'un monomère de mono-silane, le monomère de mono-silane étant des monomères de γ-amino-propyltri-éthoxysilane et de bis-silane, les monomères de bis-silane étant le bis-1,2[triéthoxysilyl]éthane ;
- soumettre la couche de revêtement à une étape de séchage pour éliminer les solvants et/ou pour initier la réaction de polymérisation et/ou pour cuire le film de polysiloxane afin de terminer la réaction de polymérisation, une couche de revêtement qui comprend du polysiloxane étant produite qui a un poids de film sec compris entre 0,25 et 10 mg/m² de Si,
- appliquer facultativement un film d'huile sur la couche de revêtement.

2. Procédé selon la revendication 1, dans lequel la couche d'étain est soumise à une étape de fusion et de trempe.

3. Procédé selon l'une quelconque des revendications précédentes, dans lequel l'étape de séchage est réalisée en utilisant la chaleur résiduelle de la bande.

4. Procédé selon l'une quelconque des revendications précédentes, dans lequel le mono-silane comprend un groupe amino destiné à servir de groupe chimiquement réactif durant la cuisson du vernis, résultant en une adhésion optimale du vernis au film de polysiloxane final.

5. Procédé selon l'une quelconque des revendications précédentes, dans lequel le polysiloxane pour le film de polysiloxane est produit par une réaction de polymérisation de (poly)silanols, qui sont formés par hydrolyse de monomères de mono-silane et/ou bis-silane.

6. Procédé selon l'une quelconque des revendications 2 à 5, dans lequel la couche d'étain après la fusion est trempée dans une eau alcaline ou une eau chaude pour obtenir une concentration élevée en groupes hydroxyle à la surface.

7. Procédé selon l'une quelconque des revendications précédentes, dans lequel les composés formant le polysiloxane, et/ou les composants (poly)silanols à partir desquels le polysiloxane est finalement formé et/ou le polysiloxane ainsi formé sont appliqués à la couche d'étain au moyen d'un procédé de pulvérisation ou d'un procédé de revêtement par plasma.

8. Procédé selon l'une quelconque des revendications précédentes, dans lequel la couche de revêtement est essentiellement constituée de polysiloxane.

9. Procédé selon l'une quelconque des revendications précédentes, dans lequel l'éthanol est le produit de réaction de l'hydrolyse des monomères de silane.

10. Procédé selon l'une quelconque des revendications précédentes, dans lequel le monomère de mono-silane est le γ-amino-propyltri-éthoxysilane avec R=CH₃CH₂ et Y=CH₂CH₂CH₂NH₂ et dans lequel le monomère de bis-silane est le bis-1,2[triéthoxysilyl]éthane avec R=CH₃CH₂ et Z=CH₂CH₂.

11. Procédé selon l'une quelconque des revendications précédentes, dans lequel le rapport du monomère de mono-silane sur les monomères de bis-silane est compris entre 1,0 et 9,0.

12. Procédé selon l'une quelconque des revendications précédentes, dans lequel la solution à appliquer à la couche d'étain est appliquée par un procédé de pulvérisation et comprend de préférence de l'eau, d'environ 0,125 % à 0,88 % en poids d'éthanol, et de 0,25 à 3,0 g/L de polysiloxane ou de composés précurseurs du polysiloxane ((poly)silanols).

13. Procédé selon l'une quelconque des revendications précédentes, dans lequel une couche de revêtement comprenant du polysiloxane est produite ayant un poids de film sec d'au moins 0,5 mg/m² de Si.

14. Fer blanc produit selon l'une quelconque des revendications 1 à 13, dans lequel le fer blanc comprend un substrat d'acier, de préférence dans lequel le substrat d'acier est fourni sous la forme d'une bande, la couche de revêtement qui comprend du polysiloxane ayant été produite par une réaction de polymérisation d'un monomère de mono-silane, le monomère de mono-silane étant des monomères de γ-amino-propyltri-éthoxysilane et de bis-silane, les monomères de bis-silane étant le bis-1,2[triéthoxysilyl]éthane et ayant un poids de film sec compris entre 0,25 et 10 mg/m² de Si.
